# EUROPEAN PATENT APPLICATION

(11) **EP 4 640 771 A1**
(43) Date of publication of application: **29.10.2025**
(21) Application number: 24172737.9
(22) Date of filing: 26.04.2024
(51) Int. Cl.: C09D 5/02, C09D 7/45, C09D 7/40, C09J 133/04, C09J 175/04

(54) **WATER-BASED COATING COMPOSITION**

(71) Applicant: Build Care Oy, 01450 Vantaa (FI)
(72) Inventor: Rahikkala, Virpi, 01450 Vantaa (FI)
(74) Representative: Laine IP Oy

(57) **Abstract**

The present invention concerns a one-component water-based coating composition comprising a polymeric matrix and inorganic granular particles, which are mixed with the polymeric matrix. The polymeric matrix is a water-based dispersion and comprises at least two polymeric components, and mixed therein inorganic granular particles that have an average particle size of at least 20 µm, as well as a stabilizer in the form of suspended biobased fibres. The present invention further concerns a surface coated with such a coating composition as well as a method for the preparation thereof.

## Description

### Field of the Invention

The present invention relates to polymer dispersions, in particular to water-based polymer dispersions for coating purposes.

### Background of the Invention

Water based polymer dispersions are well known and can be used in a wide range of applications, such as in paints, adhesives and coatings. In the construction industry, there is a demand for durable and non-toxic coatings to provide the surfaces of buildings with wear resistant properties. In particular floors of public buildings are subjected to a high degree of wear and should additionally provide for other functionality, such as noise reduction, walking comfort and cleanability.

Different floor coverings, i.e. floorings, are known in the prior art. The underlaying subfloor can be protected using, for example, carpets, wood floorings, laminates, hard floorings and polymer floorings. In constructions in general and in public buildings and industrial buildings in particular, polymer floorings of different kinds provide for good walking comfort and durability. Therefore, resilient floorings, such as vinyl sheets, adhered to the subfloor have been a common alternative in the building industry and in public spaces. In use, and in particular when installed onto subfloors that are at ground level or below, i.e., in ground-supported objects, these kinds of resilient floorings have resulted in construction damages due to poor vapor permeability, thus exposing the subfloor to moisture during a prolonged time and consequently increasing the risk for microbial growth.

In order to address the problem with poor vapor permeability, alternative floorings have been used, such as ceramic tiles, which allow moisture transfer through the seams, or traditional two component resins, such as epoxy floor coatings. Typically, these are hard surfaced floorings that consequently provide for poor acoustic properties and walking comfort, making them less suitable for public spaces. Alternative coatings, such as resin coatings, have the drawbacks of environmental and health concerns related to high contents of volatile organic carbon (VOC), in particular as such coatings typically are solvent based or two-component coatings. On the other hand, water-based or one-component coatings, are commonly associated with problems, such as the formation of cracks and poor applicability and self-levelling properties.

In view of the above drawbacks, there is still a need for alternative vapor permeable floorings that are easy to apply, cost-efficient, environmentally friendly, and provide for good properties in use, such as walking comfort and wear resistance. Early state of the art is based on compositions comprising harmful components such as reactive isocyanates, epoxides or amines.

### Summary of the invention

The invention is defined by the features of the independent claims. Some specific embodiments are defined in the dependent claims.

According to a first aspect of the present invention, there is provided a one-component water-based coating composition comprising a polymeric matrix and inorganic granular particles, which are mixed with the polymeric matrix, wherein:
- the polymeric matrix is in the form of a water-based dispersion and comprises at least two polymeric components, the first component being a polyurethane and the at least one further component being an acrylate,
- the inorganic granular particles have an average particle size of at least 20 µm and comprise at least two inorganic components, the first inorganic component having a lower density than the at least one further inorganic component, and
- the coating composition further comprises a stabilizer in the form of suspended biobased fibres.

The coating composition of the first aspect of the present invention exhibits self-levelling properties and forms a vapor permeable, flexible and wear resistant coating upon drying.

According to a second aspect of the present invention, there is provided a coated surface, wherein the surface is coated with the coating composition according to the first aspect of the present invention. Preferably the surface is a horizontal surface, more preferably a floor coated with the coating composition of the first aspect of the invention.

According to a third aspect of the present invention, there is provided a method of preparing the coating composition of the first aspect of the invention, wherein the method comprises the steps of:
a) preparing a polymeric matrix in the form a water-based dispersion by mixing a polyurethane component and at least one acrylate component,
b) adding inorganic granular particles with an average particle size of at least 20 µm to the polymeric matrix, the inorganic granular particles comprising at least two inorganic components, the first component having a lower density than the at least one further inorganic component, wherein the first component is mixed into the polymeric matrix prior to adding the second component, and
c) after mixing components in step a) and b), adding a stabilizer in the form of suspended biobased fibres.

According to a fourth aspect of the present invention, the coating composition of the first aspect of the present invention is used on horizontal surfaces in constructions.

Thus, the present invention concerns an alternative coating composition, a coated surface as well as a method for preparation of the coating composition, in particular a coating composition suitable as floor coating.

Several advantages are achieved using the present invention. Among others, the invention provides an advantageous coating composition that is easy to use due to its one component composition and self-levelling properties. Furthermore, the coating composition of the present invention has low toxicity, being a water-based composition, and is thus beneficial from an environmental and health perspective. The coating composition has good properties in both wet and dry state, exhibiting, among others, a good shelf-life. Upon drying and membrane formation, the coating composition forms a vapor permeable, high durability coating layer, with good toughness and flexibility properties, which coating layer can withstand a wide range of stress and further provides comfort properties, such as thermal insulation and noise absorption.

### Brief Description of the Drawings

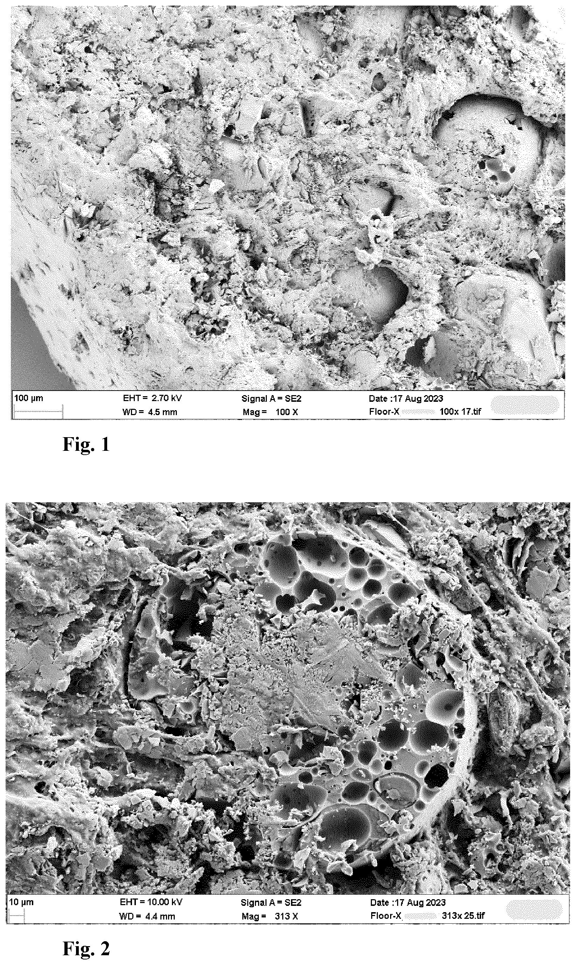

FIGURE 1 presents a scanning electron microscope (SEM) image of a coating obtained with the coating composition of the present disclosure. The image is presented as a 100x enlargement, wherein spherical lower-density inorganic granular particles (glass beads / 70% SiO₂) are visible alongside similar sized higher-density inorganic granular particles (SiO₂) with sharp edges, as well as smaller higher-density inorganic granular particles (SiO₂), all embedded in a polymeric network.
FIGURE 2 presents a SEM image of a coating obtained with the coating composition of the present disclosure. The image is presented as a 313x enlargement, with a glass bead cut in half in the centre of the image.

### Embodiments of the Invention

### Definitions

"Polymer dispersion" or "dispersion", respectively, refers in the present context to a composition wherein the polymer or polymers are present as dispersed in the medium. The polymer dispersion can also comprise other dispersed, finely divided component(s).

The dispersion can provide a polymer cross-linked structure which is a viscoelastic elastomer, which can be demonstrated, for example, by a time-rupture test. When the composition forms a flexible film, the cross-linked structure is formed by chemical bonds between the substances, preferably through weak chemical interactions, such as ionic bonds, coordination bonds, dipole-dipole interactions or Van der Waals bonds.

The liquid phase of the dispersion, i.e., "dispersion medium" is preferably comprised of water. More preferably, the dispersion is essentially free from volatile organic solvents. Thus, the percentage of water is at least 90 vol-%, preferably at least 95 vol-%, most suitably at least 97 vol-%, based on the total volume of the dispersion medium. Dispersions in such water based-liquid phases are herein referred to as water-based or aqueous dispersions.

The polymer dispersion can refer to a dispersion comprising a single type of polymer or a mix of polymers, or a mix of polymer dispersions. The polymers in dispersion may differ from each other, for example such that the monomer composition differs from one another by chemical structure, or that their particle size distributions differ from one another other, for example, by at least 20 %. The particle size distribution of the generated dispersion may be, for example, a multimodal distribution, such as a bimodal distribution, and may comprise one or more, especially two or more polymers.

In the present context, the term "multimodal" particle size distribution includes both the case where one and the same polymer component has a particle size distribution with several peaks, i.e., such that the polymer is present in two or more distinguishable particle sizes, and the case where two or more polymers have particle size distributions, the peaks of which differ from each other, i.e., each polymer has a particle size distinguishable from the particle size of the other polymers. A broad, one-peak distribution is also included in this concept, such as a polymer component present in several different particle sizes, where the particle size of the smallest polymer of the component is distinguishable from the particle size of the largest polymer of the component. As particle size difference of 50 nm is herein considered distinguishable, with a larger size difference of, for example, 100 nm being preferred.
In this context "acrylate polymer" or "acrylate" refers to polymers and copolymers derived at least in part from acrylic acid or its esters. Thus, here the term "acrylate" also includes acrylate copolymers and polymers comprising methacrylate monomer based units, as well as derivatives thereof. Thereby, acrylate polymers can include, for example, all acrylic formulations in which the building blocks are exclusively acrylic and methacrylic ester types, acrylic-styrene formulations, or for example copolymers of acrylic monomers with vinyl ester monomers. Such acrylate polymers, herein including acrylate copolymers, can be based on structural units as presented in Formula I and Formula II below, wherein R' and R", respectively, represent a chemical structure of which acrylic acid derivatives and methacrylic acid derivatives are the most common representatives of structural units in the polymer structure presented in Formula I. In the general structure of vinyl esters as presented in Formula II, R‴ and Rʺʺ can also represent, for example, vinyl acetate and vinyl versatate units, without being limited thereto. Most typically, R‴ is hydrogen. Thus, R', R", R‴, and Rʺʺ, as illustrated in Formula I and II, can independently of each other, represent, for example, hydrogen, lower, straight or branched alkyl, aryl and alkaryl, which is optionally substituted. 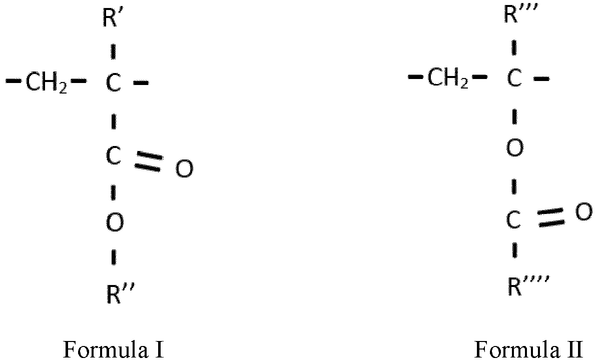 Acrylate polymers typically have a low glass transition temperature, such as maximum +6 °C, especially approximately -36 °C to ±0 °C, and they have good adhesion properties.

Within the context of the present invention "polyurethane polymer" or "polyurethanes" refers to polymers composed of organic units joined by carbamate links. By traditionally known definition polyurethanes compose of monomers containing at least two isocyanate functional groups that react with other monomers containing at least two hydroxyl (alcohol) groups, called polyols, usually in the presence of a catalyst. Within the context of the present invention, the polyurethane component is preferably selected from polyurethanes that can provide hardness to the final coating, that can be regulated by the choice of the polyurethane, such as polyurethane polyols. Aqueous polyurethane dispersions are preferable used in the preparation of the polymeric matrix.

In the context of polymeric components, the term "particle size" means an average particle size that can be determined, for example, by light or electron microscope, based on light-scattering, such as based on multiangle laser light-scattering (MALLS) or by using a device which functions according to the Coulter principle. The average particle size for polymeric components in dispersion can be determined an z-average particle size, also known as the cumulants mean. The z-average particle size can be determined by the method ISO 22412:2017.

In the context of the solid particles, such as inorganic particles or inorganic granular particles, the average "particle size" refers to the average particle size determined based on the largest dimension of the particle. The particle size for solid components with a diameter of approximately 75 µm or more in the longest direction of the particle can be measured, for example, by sieving, such as by the standard test method ASTM C136 (2019). Mechanical sieving according to standard ISO 3310-1:2016 can be used for solid components with a diameter down to 20 µm.

If not otherwise specified, the average values provided herein, such as average particle size, refers to the arithmetic average value.

The density of the granulate inorganic particles is, if not otherwise indicated, determined as the dry loose bulk density, for example according to ASTM C9/C29M (2023).

Furthermore, the term "filler" refers to components that are added to alter, for example, the final flow and density characteristics of the coating composition, without significant contribution to functionality. Such fillers are typically inorganic particles in the form of a powder, i.e., with an average particle size of less than 15 µm, typically less than 10 µm, as defined by a suitable method a presented above. Such fillers may comprise, for example, talc or lime.

If not otherwise indicated, the term stabilizer herein refers to as stabilizer in the form of suspended biobased fibers, i.e., biobased fibers in wet stage. The biobased fibers provide stability to the coating composition, and upon drying to the final coating. The stabilizer is preferably added and used as an aqueous suspension of biobased fibers, whereby the fibers remain in wet, i.e., suspended form upon blending into the coating composition.

In the present context, the term "biobased" comprises naturally derived components, or synthetically produced components with a similar or identical structure. Most preferably, the biobased components are isolated from nature, such as plant derived or wood derived components.

The term "self-levelling properties", as used herein, refers to the capability of a fluid or semifluid composition to form an even, smooth surface, without being levelled into its final shape by mechanical means. A composition having self-levelling properties will, upon being applied by use of, for example, a tooth spatula or spike roller, spread into an essentially uniform layer. That is, the composition with self-levelling properties has the characteristics of good flowability, meaning that it will self-distribute into a layer with essentially uniform surface characteristics when applied onto a horizontal surface. Within the context of the present application, a surface is considered horizontal if it is arranged essentially within a horizontal plane, still allowing for a slight deviation, such as an incline of 2-3 % with respect to the horizontal plane.

The present invention concerns a one-component water-based coating composition, which comprises a polymeric matrix and inorganic granular particles mixed with the polymeric matrix. The polymeric matrix is in the form of a water-based dispersion and comprises at least two polymeric components, the first component being a polyurethane and the at least one further component being an acrylate. The inorganic granular particles of the coating composition have an average particle size of at least 20 µm and comprise at least two inorganic components, the first inorganic component having a lower density than the at least one further inorganic component. Further, the coating composition comprises a stabilizer in the form of suspended biobased fibres.

The coating composition as described herein is a coating composition with self-levelling properties, which is particularly suitable for the coating of horizontal surfaces, such as floors. The self-levelling properties are at least in part attributed to the inorganic granular particles and the polyurethane component. The at least one acrylate component, in turn, provides good adhering competence to both dry and slightly wet surface. Upon drying, the coating composition forms a durable and flexible membrane, i.e., a coating layer. The flexibility properties of the coating layer are derived from the at least one acrylate component, while the polyurethane component provides for hardness and durability.

The coating of the present disclosure overcomes the problems of the prior art, as crack formation and peeling can be avoided due to the interaction between the polymeric matrix, the inorganic particles and the stabilizer. The polymers dispersed in the polymeric matrix provides upon crosslinking of the polymers a coating layer, in which the inorganic granular particles are embedded. The cross-linking is achieved when the liquid phase between the particles evaporates or water is otherwise removed from the coating composition (for example, the water may be absorbed into the substrate, i.e. the surface to be coated). In this case, the polymer components within the coating composition form, through the film-forming event, a coating layer. The inorganic granular particles become embedded in the dried polymeric matrix and provide for functional properties within the coating layer. The lower-density inorganic particles provide, for example, thermal insulation and noise cancelling properties, while the higher-density particles stabilize the coating. Furthermore, the inorganic granular particles provide for good flow characteristics within the coating composition, while the stabilizer in the form of suspended biobased fibers provides a network structure assisting in maintaining a uniform particle distribution.

Since the coating composition as described herein exhibits self-levelling properties obtained by an interaction between the inorganic particles and the polymeric matrix, and the composition further is designed such that the individual components remain uniformly distributed by use of a stabilizer, also the obtained coating layer show uniform characteristics.

In the coating composition as disclosed herein, the polyurethane component can be a polyurethane binder, for example, a polyurethane polyol. Such a polyurethane component can be, for example, an anionomer. The at least one acrylate component can be an acrylate binder, such as an acrylate polymer, including acrylate copolymers, a methacrylate polymer, including methacrylate copolymers, or a copolymer of methacrylate and acrylate. Such an acrylate polymer, possibly in the form of a copolymer, can comprise, for example, C₂-C₁₂-acrylate, such as, butyl acrylate, 2-ethylhexyl acrylate, vinyl acrylate, or vinyl versatate acrylate. A methacrylate polymer, possibly in the form of a copolymer, can comprise, for example, methyl methacrylate. Thus, the acrylate can comprise, for example, acrylic copolymer, versatate acrylic copolymer, vinyl versatate acrylic copolymer and vinyl acetate-co-vinyl versatate. When two or more acrylate components are used, the acrylate components preferably are selected such that they have different properties, in particular, different particle sizes. By different particle size is herein referred to a particle size distribution wherein the average particle size of the smaller polymeric component is up to 80 %, such as from 5 %, 10 % or 15 % up to 50 %, 60 % or 80 % of the larger component, when the average particle size of each component is measured using the same method.

The polymeric components can be provided as individual water-based dispersions that are combined to form the polymeric matrix. The dispersion can, for example, be anionically or cationically stabilized, depending on the pH of the dispersion.

The inorganic granular particles, e.g., solid granulates, provide structure within the polymeric matrix and also force the polymeric particles within the polymeric matrix to be distanced from each other, such that upon crosslinking, the coating layer becomes flexible. Thus, the inorganic granular particles prevent the formation of cracks upon drying into a coating layer. The inorganic granular particles preferably have an average particle size of > 20 µm, more preferably > 25 µm, even more preferably > 30 µm. Preferably, the average particle size of the inorganic granular particles is < 800 µm, more preferably < 900 µm, even more preferably < 1000 µm.

The coating composition according to the present disclosure comprises at least two inorganic components of different density and/or particle size. The chemical composition of the two or more inorganic components can be the same or different. The higher density inorganic component improves the rheological and flowability properties of the coating composition and makes it easier to apply, which in turn assists in even distribution of the lower density inorganic component in the final coating. The lower density inorganic component can, for example, have a density that is up to 80 % of the density of the higher density inorganic component. Thus, the density of the lower density inorganic component can be, for example, from 5 %, 8 %, 10 %, 15 %, 20 %, or 25 % up to 35 %, 45 %, 55 %, 70% or 80% of the higher density inorganic component.

In addition to the above components, the coating composition further comprises a stabilizer in the form of suspended biobased fibers. The term biobased fibers herein refer to fibers obtained from natural sources or synthetic fibers with a corresponding structure. In some embodiments the stabilizer comprises polysaccharide based fibers, such as cellulosic fibers. Most suitably, the biobased fibers are fibrillated natural cellulose. Such fibrillated cellulose is preferably produced by mechanical processing of wood fibers, without the addition of chemicals, without being limited thereto.

The stabilizer is a multifunctional component of the coating composition. The stabilizer, which is added in the form of suspended biobased fibers, forms a three-dimensional network structure based on the physical tendency of the biobased fibers to form networks and hydrogen bonds, both through intra fiber interaction as well as through interaction with other components of the coating composition.

Moreover, the stabilizer improves the stability of the coating composition during storage, i.e., at wet stage. The shelf life of the coating composition is improved, as the stabilizer prevents sedimenting, despite the density differences of the inorganic components of the coating. Additionally, the stabilizer improves the workability of the coating composition and makes it easier to apply. It increases the density and affects the thixotropy of the coating composition. The stabilizer improves the coverage of the coating composition, which reduces the need to add pigments. A further technical effect of the stabilizer is increased wet strength. Thus, the coating composition can withstand pumping conditions.

Furthermore, the stabilizer has several functions in the obtained coating, i.e., the dried coating layer. Among others, the stabilizer reinforces the coating and provides strength in different directions. The stabilizer provides for improved compression strength, improved bending strength and improved tensile strength. It assists in maintaining flexibility of the coating and reduces shrinkage upon drying. Furthermore, the stabilizer contributes to good resistance to different alkaline and acidic conditions, i.e. different pH. The stabilizer improves the resistance to different chemicals and improves the cleanability of the coated surface. The stabilizer prevents the formation of cracks in the coating, and further improves the wet scrub and scratch resistance of the coating layer obtained upon drying. The stabilizer also provides the coating with noise absorbing properties. This is in particular of importance in floor coatings, as it improves the acoustics of the space and reduces clacking noises from shoes.

The different components of the coating composition function together in the coating, providing several advantages both in wet and dry state. Among others, a surface coated with the coating composition of the present invention withstands impacts, wear and temperature differences without peeling and cracking. When used in buildings, in particular as floor coatings, it can provide for better acoustic properties. Further, since the coating composition forms a vapor permeable membrane coating, it prevents microbial growth, in particular microbial growth in subfloors that are in direct contact with the ground and that have a tendency to transfer moisture into the floor structure of buildings. The antimicrobial properties can be further improved by the inclusion of inorganic particles.

As a further advantage, the coating composition shows a good shelf life, such as a shelf life of 12 months or more. The combination of at least two different polymer components, at least two inorganic components of different density, as well as the stabilizer in the form of suspended biobased fibers forms a composition that is stable and prevents components from separating. The stabilizer acts as a networking agent, preventing the heavier particles form settling onto the bottom of the container during storage. Only gentle mixing of the composition is required prior to use.

Being a water-based coating composition, the negative health and environmental impact of the coating composition is low. Furthermore, the vapor permeability of the obtained coating layer is in part attributed to the dispersion being water-based. The inorganic granular particles also contribute to the vapour permeability by reducing the degree of cross-linking between the polymeric components, i.e., by providing distance between the polymeric components and thus physically hindering direct crosslinking between polymers at the site of the inorganic particle. This improves vapor transfer at the contact surface of inorganic particles and the polymeric components, as the inorganic particle is unable to cross-link to the polymeric component. The vapour permeability of a coating layer of a thickness of around 1 mm was in laboratory tests estimated to a value of approximately 50 g/m²/24 h. The tests were carried out as an evaporation test, where a container was sealed using the coating layer and the degree of evaporation of water from within the container through the coating layer was estimated by weighing the container after a predetermined time interval.

The components of the coating are designed to provide a versatile coating composition that is easy to use and to apply, and that preserves the desired properties during all phases from storage of the coating composition, applying onto the surface to be coated, and the final coating layer obtained. The coating does not need additional ingredients or on-site mixing other than normal blending, since the components of different density, functionality and size distribution function together to maintain the desired properties during all phases of use.

In preferred embodiments, the coating composition comprises, based on the total volume of the composition:
- 40-85 vol-%, preferably 45-75 % vol-%, even more preferably 55-70 vol-% of the polymeric matrix,
- 3-30 vol-%, preferably 5-25 vol-%, even more preferably 8-20 vol-% of the inorganic granular particles with an average particle size of at least 20 µm, and
- 1-10 vol-%, preferably 2-6 vol-%, even more preferably 3-5 vol-% of the stabilizer, with the proviso that the total volume of the components does not exceed 100 vol-%.

In the above composition, the polymeric matrix is preferably the dominant component functioning as a binding agent and bringing flexibility to the composition. The polyurethane component of the polymeric matrix brings hardness to the final coating and contributes to the self-levelling properties, while the acrylate component contributes to flexibility of the obtained coating. The inorganic granular particles, being solid particles, contribute to the self-levelling properties of the coating, providing an easy to apply coating composition that shows good resistance to thermal fluctuations and also flexibility. The inorganic granular particles contribute to a certain thickness and workability of the coating composition, making it spreadable by use of, for example, a tooth spatula, still maintaining good flow characteristics that provide for even, levelled surfaces as the inorganic particles settles into a relatively thin layer, preferably in a thickness of 1-3 mm.

The dry matter content of the polymeric matrix is typically at least 30 wt-%, such as at least 35 wt-% calculated based on the total weight of the polymeric matrix. The dry matter content of the polymeric matrix is typically no more than 85 wt-%. Thus, the polymeric matrix can be a water-based dispersion with a dry matter content in the range of from 30 wt-%, 35 wt-%, 40 wt-%, or 45 wt-% up to 50 wt-%, 55 wt-%, 60 wt-%, 65 wt-%, 75 wt-% or 85 wt-%, or for example approximately 50-70 wt-% or 55-65 wt-%, based on the total weight of the polymeric matrix. The polymeric matrix can be formed from two or more polymer dispersions, whereby individual polymer dispersions can be added as dispersions with a dry matter content outside the above named ranges. Furthermore, the coating composition can be adjusted to a desired rheology and viscosity by use of further additives, such as fillers.

In further preferred embodiments, the polymeric components have a multimodal particle size distribution. In some such embodiments, the polymeric matrix comprises at least three polymeric components, wherein the first polymeric component is a polyurethane, the second polymeric component is an acrylate with an z-average particle size in the range of 250-1000 nm, such as 350-650 nm, and the third polymeric component is an acrylate with an z-average particle size in the range of 10-200 nm, such as 50-150 nm.

The second and third polymeric components are in the above embodiment of differing particle size, whereby the polymeric matrix has at least a bimodal, or a multimodal size distribution. The acrylate polymer with a larger particle size preferably acts as a matrix of the polymer layer, such as a coating or film, and improves the strength properties of the coating. The other acrylate polymer, having a smaller particle size, will in turn densify the structure of the polymer layer by filling the empty spaces between the larger particles. It also forms the film faster than the polymer having a larger particle size. The particle size distribution of the polymer can thus also affect the formation rate of the coating.

In preferred embodiments, the volume ratio of the first polymeric polyurethane component to the at least one further acrylate component is in the range of 1:5-1: 1, more preferably 1:5-1:2. The preferred ratios applies both when a single acrylate component is included and when two or more acrylate components are included, whereby the ratio is calculated based on the total volume of the acrylate component. By maintaining the acrylate polymer as the main polymeric component, a desired flexibility of the coating will be obtained. The polyurethane component will contribute in achieving the desired hardness of the coating and will further improve the coating compositions application properties. The first polymeric urethane component may be present in the polymeric matrix, for example, in amounts of 2/10 - 3/10 of the total volume of the polymeric matrix. The remainder of the polymeric matrix is preferably comprised of the at least one further acrylate component, thus being present in amounts of 7/10-8/10 of the total volume of the polymeric matrix.

In preferred embodiments, the coating composition comprises at least three polymeric components, whereby the volume ratios between the first, second and third polymeric component are in the range of 1:4:1-1:1:1. The acrylate component with a larger particle size is thus preferably present in the composition in at least equal amounts with the acrylate component with smaller particle size. Preferably, the acrylate component with larger particle size is added in greater amounts than the acrylate component with smaller particle size, such as in volume ratios of larger particle size acrylate to smaller particle size acrylate in the range of 2:1-3:1. The acrylate component with a larger particle size may be present, for example, in amounts of 4/10-6/10 of the total volume of the polymeric matrix, while the acrylate component with smaller particle size may be present in an amount of, for example 2/10-3/10 of the volume of the polymeric matrix.

The coating composition of the present invention exhibits self-levelling properties, making it easy to apply and provides for even, relatively smooth surfaces. The self-levelling properties are at least in part attributed to the inorganic granular particles contained within the polymeric matrix. The lower-density inorganic granular particles, herein referred to as the first inorganic component, makes the composition lighter. The lighter, lower-density particles will contribute to the flow characteristics of the coating, which is further improved by the use of rounded particles or spherical particles. Rounded particles, as used herein, is to be interpreted to include particles that have a curved surface, that preferably is essentially smooth without sharp edges. Such rounded particles typically have a circular or oval cross-section, still allowing for irregularities.

The inclusion of at least one further inorganic component, being inorganic granular particles with a higher density than the first inorganic component, have in combination with the first inorganic component of lower density the effect of improving the workability of the coating, i.e., it improves the coating composition's application properties and contributes to the self-levelling properties thereof. It brings weight into the coating, improving its application properties and further makes the final coating durable.

The higher density inorganic particles can be sharp edged granular particles of either irregular or regular shape, or a blend of particles having different shapes. Preferably, the inorganic particles are quartz particles (SiO₂). Alternatively, or additionally, crushed or grinded stone or mineral material can be used as an inorganic component, in particular as the higher density inorganic component.

The combination of rounded, lower density particles, and sharp edged, higher density particles will provide for self-levelling properties simultaneously with the particles settling in a compact manner, providing for an even distribution of inorganic particles of different density throughout the coating layer. Likewise, the inorganic granular particles will contribute to an even distribution of polymeric binder throughout the cross section of the applied coating. Furthermore, the inorganic granular particles will provide spacing between the polymeric particles, thus affecting the degree of direct cross-linking between the polymers, improving the flexibility and vapour permeability of the obtained coting.

In some preferred embodiments, the first inorganic component has a hollow structure, preferably such that the density ratio of the first inorganic component to the at least one further inorganic component is in the range of 1: 15-1:2. Thus, the density ratio of the first inorganic component to the at least one further inorganic component can be, for example, 1:8-1:2 or 1:6-1:3. Examples of hollow components are expanded inorganic granular particles, such as microspheres and beads. Preferably the hollow inorganic component is glass beads, or inorganic granulates with enclosed air or gas spaces. The first inorganic component may be a quartz component, i.e., may contain silicon dioxide (SiO₂).

The inclusion of hollow inorganic components, in particular with spherical shape, such as beads, contribute to the self-levelling properties of the coating composition. Further, the lower-density or hollow particles will improve the sound absorbing properties of the coating and will also function as thermal insulation. In particular as coating on floor constructions, hollow particles will contribute to a more pleasant walking experience, as it evens out temperature differences and absorbs noise. Additionally, the lower-density, inorganic component improves the mechanical properties of the obtained coating, by improving its flexibility and by reducing crack formation. The inorganic components further improve the moisture and chemical tolerance of the obtained coated surface. These advantages can be achieved by inorganic granular particles of different shapes, in particular by rounded, smooth surfaced particles, such as beads or microspheres.

The use of inorganic components in the coating composition can prevent microbial growth. A further advantage of the inclusion of inorganic particles is that they can provide anti-slip properties to the coated surface.

In preferred embodiments, the first inorganic component has a density in the range of 0.2-1.0 kg/L, such as 0.3-0.9 kg/L, and the at least one further inorganic component has a density in the range of 1.2-3.6 kg/L, such as 1.8-3.0 kg/L. Such density differences can be obtained, for example by use of hollow, respectively solid, inorganic granulates made of, for example, glass or silicon dioxide, or a combination thereof.

In preferred embodiments, the inorganic granular particles comprise at least three inorganic components. The use of three inorganic components of different sizes and/or density provides for a coating composition that has good application properties and wherein the solid particles settle tightly against each other, providing structure to the polymeric matrix. In some embodiments, the at least one inorganic component, i.e., the inorganic particles of higher density, such as solid inorganic granulates, are included in the coating composition in two different particle sizes. This will allow for the smaller particles to, within the coating layer, settle in between the larger particles that can be of lower density, similar density or higher density, i.e. the first inorganic component and any further higher density component of larger particle size.

In a coating composition having at least three inorganic components, the first inorganic component can have an average particle size in the range of 70-500 µm, preferably in the range of 100-400 µm, the second inorganic component can have an average particle size in the range of 30-300 µm, preferably in the range of 50-200 µm, and the third inorganic component can have an average particle size in the range of 70-700 µm, preferably in the range of 100-600 µm. Thus, the lower density component and one of the higher density components can have a similar particle size, while the other higher density component can have a smaller particle size, enabling the smaller particles to settle in between the larger components in the obtained coating layer. The combination of solid particles of different size will provide for a compact and wear resistant coating.

In some embodiments, the volume ratio of the first inorganic component to the at least one further inorganic component is in the range of 1:2-2:1, preferably 2:3-3:2. The preferred ratios applies both when a single higher-density inorganic component is included and when two or more higher density inorganic components are included. In the latter case, the ratio is calculated based on the total volume of the higher density inorganic component. Thereby, the first component with lower density can be present in equal volume portions with the one or more higher density components. Alternatively, the proportions may be adjusted such that a majority (in volume) of the inorganic particles are low density particles, providing for a more light-weight coating with better thermal insulation and sound absorption properties. On the other hand, by inclusion of a larger volume portion of higher density components, a more compact structure may be obtained. The first inorganic component of lower density may be present, for example, in a volume ratio of 4/10-5/10 based on the total volume of the inorganic granular particles. The at least one further inorganic component of higher density may be present, for example, in total amounts of 5/10-6/10 of the total volume of inorganic granular particles, preferably such that the 2/10-3/10 of the total volume of the inorganic granular particles is formed of the smaller inorganic component with a preferred particle size of 30-300 µm, and around 3/10 is formed of a component with a preferred particle size of 70-700 µm.

In some preferred embodiments, the first inorganic component and/or the at least one further inorganic component comprises silicon dioxide or is silicon dioxide (SiO₂). Silicon dioxide, i.e. quartz, provides for high durability coatings with antimicrobial properties.

In some preferred embodiments, the stabilizer is an aqueous gel containing aggregates of polysaccharide based fibers, such as cellulosic fibers. Preferably the aggregates of polysaccharide based fibers have an average length in the range of 20-100 µm, preferably 30-70 µm, measured in the longest direction of the aggregate. Most suitably, the fibers are mechanically fibrillated natural cellulose fibers. The aqueous gel can have a fiber content of 1-10 weight-%, such as 2-5 weight-%.

The coating composition according to the present disclosure can contain further components or additives. In some embodiments, the coating composition further comprises one or more agents selected from dispersing agents, defoamers, biocides, pigments, fillers, hydrophobic agents, surfactants, solvents, and plasticizers.

A dispersing agent, i.e., dispersant, can be added to the composition. The dispersant improves the dispersion properties of the polymeric matrix, keeping the polymeric components dispersed in the liquid phase during the preparation and storage of the composition. Furthermore, the dispersing agent will affect the open time of the polymer, i.e., the time until a surface film is formed. The dispersing agent can have an ionic, amphiphilic structure. Such dispersants are preferably present in amounts of less than 1.0 vol-%, more preferably less than 0.5 vol-%, even more preferably less than 0.3 vol-% based on the total volume of the composition.

To prevent foam formation, a defoamer such as organically modified siloxane can be added. Defoamers are preferably present in total amounts of less than 1 vol-%, more preferably less than 0.5 vol-% based on the total volume of the composition. A biocide can be added as preservative. Such biocides are preferably present in amounts of less than 0.5 vol-%, more preferably less than 0.3 vol-% based on the total volume of the composition.

Furthermore, the coating composition can contain pigments, such as metal oxides, for example iron oxide or titanium oxide. Such pigments typically have a much smaller particle size than the inorganic granular particles of the coating composition, the particle size of the pigments typically being less than 1 µm, for example 0.1-0.3 µm. The pigments also affect the viscosity of the product, whereby it may be preferable to use relatively small amounts thereof to achieve a desired appearance of the coating. Preferably pigments are present in a total amount of less than 3 vol-%, more preferably less than 2 vol-% based on the total volume of the composition.

The final viscosity, drying time and/or pH of the coating composition can be adjusted by the addition of fillers. The fillers are typically inorganic compounds with a fine, powdered structure. Such fillers can be selected, for example, from silicates, sulfonates or carbonates, typically with an average particle size in the range of 0.1-15 µm. For example, magnesium silicate, barium sulphate or calcium carbonate, or a combination thereof, may be added as fillers. Such fillers are preferably present in a total amount of 10-25 vol-%, more preferably in a total amount of 15-20 vol-% based on the total volume of the composition. Fillers with different particle size may be blended to adjust the body of the coating composition, for example, such that talc with a particle size of 5-15 µm, barium sulphate with a particle size of 1-5 µm, and/or calcium carbonate with a particle size of 0.1-1.5 µm are present, each independently in an amount of 3-10 vol-% of the total volume of the composition.

Hydrophobic agents can also be added to alter the viscosity, such as an emulsion of silicone resins, for example modified polysiloxanes. Some fillers can also have hydrophobic properties, such as hydrated magnesium silicate. Any hydrophobic additives are preferably present in a total amount of less than 3 vol-%, such as less than 2 vol-% based on the total volume of the composition.

Surfactants may be added to the composition to reduce the surface tension. This will affect the drying of the coating composition and the self-levelling properties. Such a surfactant can be, for example, sodium lauryl sulphate and alkyl benzene sulphonic acid or sulphonate, such as sodium dodecyl diphenyloxide disulphonate, or an ethoxylated acetyldiol. Typically, surfactants may be present in a total amount of up to 5 vol-%, preferably up to 3 vol-% based on the total volume of the composition.

In order to prevent shrinkage of the surface and thereby the formation of cracks or other surface irregularities, it is be beneficial to add a plasticizer. By addition of a plasticizer or a solvent, the open time of the coating composition can be prolonged, i.e. the formation of a surface film can be delayed. This will typically improve the coating quality, as the water within the coating composition can evaporate through the open surface portion of the coating, which in turn provides for uniform drying and prevents shrinkage and crack formation. The effect is further improved by the inorganic particles, which provides for physical distance and/or interruptions between the polymeric components, which also prevents shrinkage and crack formation. Alternatively, or additionally, small amounts of solvents may be used. The plasticizer and/or the solvent, is preferably added in total amounts of up to 5 vol-%, more preferably in amounts up to 3 vol-%. Thus, the plasticizer and/or solvent can be added in a total amount from 0 vol-%, 0.5 vol-% or 1.5 vol-%, up to 3 vol-% or 5 vol-%, based on the total volume of the coating composition. For indoor use, the use of solvents can be limited to reduce the VOC emissions. A solvent or plasticizer can be chosen based on the characteristics of the surface to be coated and the intended end-use in indoor or outdoor applications. Suitable plasticizers are, for example benzoate esters, glycol dibenzoates, or other glycol-based plasticizers. Preferably, the plasticizer is chosen from a range of compounds with low VOC emissions.

The viscosity of the coating composition is preferably in the range of 2000-4000 mPas, most preferably around 3000-3500 mPas, when measured according to standard EN ISO 3219:1993 at a temperature of around 19.5-23.5 °C. A viscosity within this range provides for a coating composition that is easy to apply, i.e., it has good flow characteristics while simultaneously providing a desired thickness. The density of the coating composition is preferably in the range of 1-1.5 g/cm³.

The present invention also relates to a surface coated with the coating composition according to the present disclosure, and any embodiments thereof. Preferably, the surface is a horizontal surface, most suitably the surface is a floor. The coating composition is suitable for use on the surface of a wide range of materials, such as on concrete surfaces, cement surfaces, wooden surfaces, or construction boards, such as veneer, cross laminated timber, fiber boards or gypsum slabs. Since the coating is very versatile, and adheres well also on slightly moist surfaces, it can be used in several different locations.

A surface coated with the coating composition of the present disclosure comprises at least one layer of coating obtained by said composition. The coated surface may comprise further coating layers, such as primer layers and top coatings.

The thickness of the layer of coating obtained by the coating composition according to the present disclosure is preferably from 1 mm up to 3 mm, such as from 1.5-3 mm.

The coating is preferably applied to the substrate, i.e. the surface to be coated, by means of a tooth spatula and/or a spike roller.

In further preferred embodiments, the coated surface comprises a coating layer obtained by the composition according to the present disclosure. The coated surface comprising a coating layer obtained by said coating composition typically exhibits at least one of the following features:
- bond strength of at least 2 N/mm², preferably at least 2.5 N/mm², when measured according to EN 13892-8:2003, thus fulfilling the classification B2.0 in accordance with EN 13813:2003,
- impact resistance of at least 8 Nm when measured according to EN ISO 6272-1:2011, thus fulfilling the classification IR8 in accordance with EN 13813:2003,
- wear depth of less than 100 µm, preferably less than 80 µm when measured according to EN 13892-4:2003, thus fulfilling the classification AR1.0 in accordance with EN 13813:2003, and
- total VOC emissions of less than 150 µg/m³ when measured in accordance with ISO 16000 and EN 16516:2017.

Preferably, the coating obtained by the coating composition, i.e., the coated surface, show all of the above properties. The good bond strength, impact resistance and wear resistance properties obtained by the coating of the present disclosure provides for very durable coated surfaces, that can withstand high wear conditions. Thus, the coating is well suited for use on surfaces, in particular floor surfaces, in public buildings.

The coating composition is further designed such that it has a low environmental impact, and does not affect the indoor air quality negatively. For example, the coating composition is designed to be free from phthalates and isocyanates. When used indoors, the total volatile organic carbon (TVOC) emissions measured three days after coating can be 2500 µg/m³ or less, preferably 2100 µg/m³ or less. The corresponding TVOC specific emission rate (SER) measured three days after coating can be 3000 µg/m²·h or less, preferably 2600 µg/m²·h or less. When measured 28 days after coating, the corresponding TVOC value can be 150 µg/m³ or less, preferably 120 µg/m³ or less. The corresponding TVOC specific emission rate (SER) measured 28 days after coating can be 170 µg/m²·h or less, preferably 150 µg/m²·h or less. The VOC analysis can be carried out in accordance with ISO 16000 and EN 16516:2017. More specifically, in the test carried out in the context of the present invention, the sample preparation was carried out in accordance with ISO 16000-11:2006, the emission chamber testing in accordance with ISO 16000-9:2006, the sampling of VOC in accordance with IS016000-6:2021, and the analysis of VOC in accordance with ISO 16000-6:2021, using ATD-GC/MS. The above presented values were obtained in tested carried out using a solvent free coating composition, which contained around 1 vol-% plasticizer.

The low TVOC emissions provides for a coating that is well suited for indoor use, without being limited to such applications. Since the composition tolerates temperature changes well, it is can also be used in unheated buildings, such as light constructions and cold storages. Further, it may be used in outdoor applications.

The present invention further relates to a method of preparing a coating composition according to the present disclosure. The method comprises the steps of:
a) preparing a polymeric matrix in the form a water-based dispersion by mixing a polyurethane component and at least one acrylate component,
b) adding inorganic granular particles with an average particle size of at least 20 µm to the polymeric matrix, the inorganic granular particles comprising at least two inorganic components, the first component having a lower density than the at least one further inorganic component, wherein the first component is mixed into the polymeric matrix prior to adding the second component, and
c) after mixing components in step a) and b), adding a stabilizer in the form of suspended biobased fibres.

By first preparing the polymeric matrix by blending the polymeric components dispersed in aqueous solutions, and by adding optional defoamers, preservatives or dispersing agents, the polymeric components are allowed to mix evenly. The polymeric matrix can be prepared by mixing at relatively low mixing speed, such as 350-1000 rpm, for a few minutes or longer, e.g., 3-30 minutes. Once the polymeric matrix is formed, being an aqueous dispersion of the polymeric components, the lower density inorganic component can be added. By first adding the lower density inorganic component, these are allowed to blend evenly into the polymeric matrix. Subsequently further solid components can be added, in particular, the at least one inorganic component of higher density. At this stage, any optional further solid components can be added, such as any pigments and inorganic fillers. The solid components may be added using a higher mixing speed, such as from 1500-4000 rpm. Preferably, the mixing is carried out for a few minutes or longer, e.g., 3-30 min, prior to adding the stabilizer in the form of suspended biobased fibers. By adding the stabilizer last, excess heating of the composition can be avoided. This improves the final properties of the coating composition as the increased temperature leads to increased evaporation of the aqueous medium, and condensation of ambient moisture can be avoided. The stabilizer is preferably added during mixing with moderate mixing speed, such as 1000-2000 rpm. At this stage, prior to, simultaneously with, or after the addition of stabilizer, any optional further additives may be added. Such optional additives may be selected from defoamers, hydrophobic additive, surfactants, solvents or plasticizers. The final mixing may be carried out at moderate mixing speeds, such as 1000-2000 rpm. The duration of the final mixing step may be, for example 10-40 minutes, without being limited thereto. It is to be understood that within this context, the disclosed mixing speeds and mixing times are only provided as guidance, and one skilled in the art could alter these parameters to match the demands of the total volume prepared and the equipment used. The coating composition is preferably prepared into a viscosity of 2000-4000 mPas. The density of the coating is preferably in the range of 1.0-1.5 g/cm³.

After preparation of the water-based coating, the mixture is allowed to rest for at least 24 h, preferably three days, even more preferably one week prior to use.

In preferred embodiments, any filler, in particular inorganic filler is added in step b). In further preferred embodiments, step c) includes the addition of a solvent or plasticizer. Any inorganic filler is preferably added in a total amount of 10-25 vol-%, preferably 15-20 vol-%, based on the total volume of the composition.

The solvent or plasticizer is preferably added in a total amount of up to 5 vol-%, more preferably in amounts up to 3 vol-%, such as 0.5-3 vol-% based on the total volume of the composition.

In preferred embodiments, the polymeric matrix, the inorganic granular particles, as well as the stabilizer are added in proportions and with characteristics as disclosed in the context of the embodiments of the first aspect of the present disclosure.

The present invention also relates to the use of the coating composition according to the first aspect of the invention or any embodiments thereof on horizontal surfaces in constructions.

In some embodiments, the use comprises application of the coating composition using a tooth spatula. Such a toot spatula preferably has a tooth profile where the width of the tooths are equal to or narrower than the gaps. The gaps preferably have a U-shaped profile. The alignment or curvature of the spatula is preferably such that the coating composition is allowed to slightly accumulate on the frontside of the spatula in the direction of the application stroke. Such a tooth spatula design allows for uniform application of the coating composition of the present disclosure, as the relatively low degree of tapering within the U-shaped caps allows the coating composition to be applied in an amount sufficient for levelling into an even surface. The surface can be finished by use of a spike roller.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In this description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The following non-limiting examples are intended merely to illustrate the advantages obtained with the embodiments of the present invention.

### EXAMPLES

### Example 1 - Preparation of coating composition according to the present disclosure

A coating composition according to the present disclosure was prepared in laboratory sized equipment by first forming a polymeric matrix by blending two different water-based polymer dispersions in the following proportions:
- 50 vol-% of polymeric polyurethane component (polyurethane polyol resin) dispersed in aqueous medium to a solid matter content of around 35 wt-% based on the total weight of the dispersion, and
- 50 vol-% of polymeric acrylate component with a z-average particle size of around 500 nm dispersed in aqueous medium to a solid content of around 60 wt-% based on the total weight of the dispersion.

The components of the polymeric matrix were blended together with dispersion agent, defoamer and biocide to obtain a uniform mixture, whereafter a glass beads (70 % SiO₂) with a bulk density of around 0.4 kg/L was added as a first inorganic granular component under mixing. Once the glass beads had been blended into the composition, a higher density inorganic component (SiO₂ granulates, average particle size 50-200 µm, relative density 2.65), fillers (talc, calcium carbonate) and pigments (iron oxide, titanium oxide) were added to the composition under mixing. A stabilizer in the form of an aqueous suspension of cellulosic fibers (3 wt-% cellulose, 97 wt-% water) was added to composition under mixing, and once the composition had been blended into an essentially uniform dispersion, small amounts of liquid components were added. The liquid components added were a surfactant, a hydrophobic agent and a plasticizer.

The thus obtained coating composition comprised, based on the total volume of the coating composition, 60 vol-% of polymeric matrix, 0.6 vol-% in total of dispersion agent, defoamer and biocide, 5.5 vol-% of first inorganic granular component, 5 vol-% of second granular inorganic component, 17.7 vol-% of fillers, 1.4 vol-% pigments, 4.5 vol-% of stabilizer, and 5.3 vol-% in total of surfactant, hydrophobic agent and plasticizer.

The coating composition was applied into a layer of around 3 mm and formed, upon drying, a flexible coating layer that showed no visible defects in the layer structure, such as cracks.

### Example 2 - Preparation of coating composition according to a preferred embodiment

A coating composition of the present disclosure was prepared in a laboratory sized equipment by first forming a polymeric matrix by blending three different water-based polymer dispersions in the following proportions:
- 25 vol-% of polymeric polyurethane component (polyurethane polyol resin) dispersed in aqueous medium to a solid matter content of around 35 wt-% based on the total weight of the dispersion,
- 50 vol-% of polymeric acrylate component with a z-average particle size of around 500 nm dispersed in aqueous medium to a solid content of around 60 wt-% based on the total weight of the dispersion,
- 25 vol-% of a polymeric vinyl acrylate component with a z-average particle size of around 90 nm dispersed in aqueous medium to a solid content of around 45 wt-%, based on the total weight of the dispersion.

The polymeric matrix was mixed using a mixing speed of approximately 500 rpm until an even polymer dispersion was formed, approximately for 5 minutes. Once the water-based polymer dispersion of the three components, i.e. the polymeric matrix, was formed, inorganic granulate particles were added in two steps. In the first step, glass beads (70 % SiO₂) having an average grain size of around 100-300 µm and a bulk density of around 0.40 kg/L were added and allowed to be evenly distributed into the polymeric matrix by mixing. Subsequently, a second inorganic granular component comprising quartz sand was added in two different size distributions, with a smaller component having a particle size in the range of around 50-200 µm and a lager component having a particle size in the range of around 100-600 µm. The relative density of the quartz sand was 2.65. The volume ratio of the glass beads to the quartz sand was approximately 2:3. Black and white pigment were added to obtain a gray color. Furthermore, inorganic fillers comprising talc and calcium carbonate powder were added to adjust the viscosity and body of the composition. The mixture was blended using a mixing speed of around 1500-2000 rpm during the addition of the inorganic components and the mixing was continued until an even mixture was obtained.

As a last step, an aqueous gel comprising suspended biobased fibers (fibrillated cellulose) in an amount of around 3 wt-%, based on the total weight of the aqueous gel, was added as stabilizer. The mixing speed was at this stage slightly decreased to approximately 1500-2000 rpm. The mixing was continued for another 20-30 min to obtain a uniform mixture. The composition was finalized by the addition of liquid additives, such as plasticizer, under a mixing speed of 1500 rpm. The final composition was slightly alkaline, with a pH of around 9.

Based on the total volume of the thus prepared coating composition, the polymeric matrix constituted around 55-60 vol-% of the composition, the inorganic particles around 10-15 vol-% of the composition, and the aqueous stabilizer around 3-6 vol-%. The remainder being mostly inorganic fillers, which were present in a total amount of around 15-20 vol-%, with other additives, such as surfactants, plasticizers, hydrophobic additive, and pigments being present in a total amount of up to around 7 vol-%, of which around 1.5 vol-% was pigments.

The thus obtained coating composition was allowed to rest for one week after which it obtained its final properties.

The coating composition was applied onto an even surface and formed a coating without the formation of cracks and without the coating withdrawing from the edges upon drying.

In further tests, the coating composition as presented above was slightly altered from the above presented values, both in regard to the ratios of different components and the respective amount of polymeric matrix, inorganic granular particles and stabilizer in the form of suspended biobased fibers, still providing satisfactory coatings upon drying with no crack formation.

### Example 3 - Coating compositions with two granular inorganic components

Coating compositions with similar component proportions as in Example 2 were prepared, with the exception that only the smaller particle size inorganic granular particles or the larger size inorganic granular particles were used, respectively. The inorganic granular component was in respective samples added in lower amounts than in Example 2, being around 8 vol-% in total based on the total volume of the coating composition. The ratio of hollow inorganic particles to solid inorganic particles was approximately in the range of 1:3 and 3:2 in respective samples. The amount of polymeric matrix was correspondingly increased when compared to Example 2, being present in a total amount of around 65 vol-%, of which slightly over half was an aqueous dispersion of a larger particle size acrylate (35 vol-% in final coating composition), and the rest being equal shares, i.e., around 15 vol-% of final coating composition of smaller particle size acrylate and polyurethane dispersions. The stabilizer (aqueous fiber suspension, 3 wt-% of cellulosic fibers, was added in an amount of around 4 vol-%. The remainder was mostly inorganic fillers, which were present in a total amount of around 16-20 vol-%, with other additives, such as surfactants, plasticizers, hydrophobic additive, and pigments being present in a total amount of up to around 7 vol-%, of which around 1.5 vol-% was pigments.

The thus obtained coating compositions could be successfully applied into a coating layer without crack formation or withdrawal from the edges upon drying.

### Example 4 - Preparation of sample for durability tests

A coating composition of the present invention was prepared according to the preparation scheme presented in Example 2, with a composition as presented in Table 1. The percentages are provided as vol-% based on the total volume of the final composition. The density and particle size were provided by the manufacturer. The dry matter content of the polymeric dispersions is provided as wt-% based on the total weight of the dispersion.

### Durability properties of coating layer obtained with the coating composition of Example 4

The coating composition of the present disclosure, prepared according to Example 4, was applied onto a horizontal surface using a tooth spatula and spike roller into a thickness of around 3 mm. The consumption of coating agent was around 4000 g/m².

Durability tests were performed on the surface comprising a thus obtained coating layer.

The bond strength of the coating was tested following EN 13892-8:2003 "Methods of test for screed materials - Part 8: Determination of bond strength" by use of a tensile bond strength apparatus (Easy M10, model BPS Wennigsen GmbH, max. 10 kN), a test speed of 100 N/s (0.05 N/mm² x s), and a test cylinder with a diameter of (50 ± 0.5) mm. A two-component epoxy resin adhesive was used in the tests. The bond strength determined as a mean value of five repetitive tests was 2.9 N/mm².

The impact resistance of the coating was tested following EN ISO 6272-1:2011 "Paints and varnishes - Rapid deformation (impact resistance tests) - Part 1: Falling-weight test, large-area indenter (ISO 6272-1:2011), sub-clause 7.2. A falling weight test apparatus (Erichsen, model 304) was used, with a falling weight of 1 kg, a falling height of 81 cm, an impact energy of 8 Nm and a ball diameter of 20 mm. The test positions were examined by a lens with reinforced naked eye. No cracks or detachments were detected after the tests (5 repetitions performed).

The wear resistance of the coating was evaluated following EN 13892-4:2003 "Methods of test for screened materials - Part 4: Determination of wear resistance BCA". An abrasion test apparatus BCA tester was used, the load application was carried out by three steel rolls with a speed of (180 ± 15) r/min, 2850 cycles and an incident load of 65 kg. The wear resistance was determined by measuring the wear depth after loading to the nearest 10 µm using a depth measurement gauge. The mean value obtained by eight test positions was 70 µm.

**Table 1**

| **Raw material** | **Amount [vol-%]** | **Additional information** |
|---|---|---|
| Poly urethane polyol resin | 16.5 | dry matter content 33 wt-% |
| Acrylate binder | 28.5 | 500 nm z-average particle size |
| | | dry matter content 60 wt-% |
| Vinyl versatate acrylate | 13.0 | 90 nm z-average particle size |
| | | dry matter content 44 wt-% |
| Defoamer | 0.4 | organically modified siloxane |
| Preservative | 0.2 | biocide |
| Dispersing agent | 0.1 | ionic, amphiphilic |
| | | |
| Glass granulates (70 % SiO₂) | 6.0 | 100-300 µm grain size |
| | | bulk density 0.40 kg/L |
| Quartz sand (99 % SiO₂) | 4.0 | 100-300 µm grain size |
| | | relative density 2.65 |
| Quartz sand (99 % SiO₂) | 3.5 | 50-200 µm grain size |
| | | relative density 2.65 |
| Black pigment | 0.4 | Iron oxide |
| White pigment | 1.0 | TiO₂ |
| Talc | 6.4 | Mg₃Si₄O₁₀(OH)₂, hydrophobic |
| | | density 2.75 kg/L |
| | | particle size 10 µm |
| CaCO₃ | 4.5 | density 2.6-2.9 kg/L |
| | | particle size 1.8 µm |
| CaCO₃ | 6.8 | density 1.2-1.45 kg/L |
| | | particle size 0.3 µm |
| | | |
| Fiber gel (aqueous suspension) | 4 | 3 wt-% virgin cellulose |
| | | 97 wt-% water |
| | | |
| Hydrophobic additive | 1.3 | Modified polysiloxane resin |
| Surfactant | 1.4 | Ethoxylated acetylenic diols |
| Solvent | 2.0 | Butyl glycol |

### Industrial Applicability

The coating composition of the present invention can be applied on various substrates to form protective surfaces. The coating composition can be used to replace traditional two-component or solvent based coating compositions.

In particular, the present coating composition is useful in the building industry and for the formation of floor coatings. Due to the high durability properties and low environmental impact and low toxicity, the coating is well suited for use in all kinds of constructions, such as in industrial and public buildings.

## Claims

1. A one-component water-based coating composition comprising a polymeric matrix and inorganic granular particles, which are mixed with the polymeric matrix, **characterized in that**:
- the polymeric matrix is in the form of a water-based dispersion and comprises at least two polymeric components, the first component being a polyurethane and the at least one further component being an acrylate,
- the inorganic granular particles have an average particle size of at least 20 µm and comprise at least two inorganic components, the first inorganic component having a lower density than the at least one further inorganic component, and
- the coating composition further comprises a stabilizer in the form of suspended biobased fibres.

2. The coating composition according to claim 1, **characterized in that** the coating composition comprises, based on the total volume of the composition:
- 40-85 vol-%, preferably 45-75 % vol-% of the polymeric matrix,
- 3-30 vol-%, preferably 5-25 vol-% of the inorganic granular particles with an average particle size of at least 20 µm, and
- 1-10 vol-%, preferably 2-6 vol-% of the stabilizer,
with the proviso that the total volume of the components does not exceed 100 vol-%.

3. The coating composition according to claim 1 or 2, **characterized in that** the polymeric matrix comprises at least three polymeric components, wherein
- the first polymeric component is a polyurethane,
- the second polymeric component is an acrylate with a z-average particle size in the range of 250-1000 nm, preferably 350-650 nm, and
- the third polymeric component is an acrylate with a z-average particle size in the range of 10-200 nm, preferably 50-150 nm.

4. The coating composition according to any of the preceding claims, **characterized in that** volume ratio of the first polymeric polyurethane component to the at least one further acrylate component is in the range of 1:5-1: 1, preferably 1:5-1:2.

5. The coating composition according to any of the preceding claims, **characterized in that** the first inorganic component has a hollow structure, preferably such that the density ratio of the first inorganic component to the at least one further inorganic component is in the range of 1: 15-1:2.

6. The coating composition according to claim any of the preceding claims, **characterized in that**:
- the first inorganic component has a density in the range of 0.2-1.0 kg/L,
- the at least one further inorganic component has a density in the range of 1.2-3.6 kg/L.

7. The coating composition according to any of the preceding claims, wherein the inorganic granular particles comprise at least three inorganic components, **characterized in that**:
- the first inorganic component has an average particle size in the range of 70-500 µm, preferably in the range of 100-400 µm,
- the second inorganic component has an average particle size in the range of 30-300 µm, preferably in the range of 50-200 µm,
- the third inorganic component has an average particle size in the range of 70-700 µm, preferably in the range of 100-600 µm.

8. The coating composition according to any of the preceding claims, **characterized in that** the volume ratio of the first inorganic component to the at least one further inorganic component is in the range of 1:2-2:1, preferably 2:3-3:2.

9. The coating composition according to any of the preceding claims, **characterized in that** the first inorganic component and/or the at least one further inorganic component comprises silicon dioxide (SiO₂).

10. The coating composition of any of the preceding claims, **characterized in that** the stabilizer is an aqueous gel containing aggregates of cellulosic fibers, preferably the aggregates have an average size in the range of 20-100 µm.

11. The coating composition according to any of the preceding claims, **characterized in that** the coating composition further comprises one or more agents selected from dispersing agents, defoamers, biocides, pigments, fillers, hydrophobic agents, surfactants, solvents, and plasticizers.

12. A coated surface, **characterized in that** the surface is coated with the coating composition according to any of the preceding claims, preferably the surface is a horizontal surface, more preferably a floor.

13. A coated surface according to claim 12, **characterized in that** the coated surface comprises a coating layer obtained by the composition according to any one of claims 1-12, wherein the coating layer exhibits at least one of the following features:
- bond strength of at least 2 N/mm² when measured according to EN 13892-8:2003,
- impact resistance of at least 8 Nm when measured according to EN ISO 6272-1:2011,
- wear depth of less than 100 µm when measured according to EN 13892-4:2003, and
- total VOC emissions of less than 150 µg/m³ when measured according to ISO 16000 and EN 16516:2017.

14. A method of preparing a coating composition according to any one of claims 1-11, **characterized in that** the method comprises the steps of:
a) preparing a polymeric matrix in the form a water-based dispersion by mixing a polyurethane component and at least one acrylate component,
b) adding inorganic granular particles with an average particle size of at least 20 µm to the polymeric matrix, the inorganic granular particles comprising at least two inorganic components, the first component having a lower density than the at least one further inorganic component, wherein the first component is mixed into the polymeric matrix prior to adding the second component, and
c) after mixing components in step a) and b), adding a stabilizer in the form of suspended biobased fibres.

15. Use of the coating composition according to any one of claims 1-11 on horizontal surfaces in constructions.
